# FASCICULE DE BREVET EUROPEEN

(11) **EP 2 416 944 B1**
(45) Date de publication et mention de la délivrance du brevet: **25.06.2014**
(21) Numéro de dépôt: 10715988.1
(22) Date de dépôt: 26.03.2010
(51) Int. Cl.: B29C 70/24, F01D 5/28

(54) **PROCEDE DE FABRICATION D'UNE AUBE DE TURBOMACHINE EN MATERIAU COMPOSITE**
VERFAHREN ZUR HERSTELLUNG EINER AUS EINEM VERBUNDMATERIAL HERGESTELLTEN TURBOMASCHINENSCHAUFEL
METHOD FOR PRODUCING A TURBOMACHINE BLADE MADE FROM A COMPOSITE MATERIAL

(30) Priorité: 06.04.2009 FR 0952232
(43) Date de publication de la demande: 15.02.2012
(73) Titulaire: Snecma, 75015 Paris (FR); HERAKLES, 33185 Le Haillan (FR)
(72) Inventeur: BLANCHARD, Stéphane, Pierre, Guillaume, F-77590 Chartrettes (FR); BOUILLON, Eric, F-33185 Le Haillan (FR); COUPE, Dominique, F-33185 Le Haillan (FR); ILLAND, Hubert, F-53960 Bonchamp (FR); ROUSSILLE, Clément, F-33200 Bordeaux (FR)
(74) Mandataire: Joly, Jean-Jacques
(86) Numéro de dépôt international: PCT/FR2010/050565
(87) Numéro de publication internationale: WO 2010/116066

(56) Documents cités:
- EP-A1- 0 309 658
- EP-A1- 0 602 631
- EP-A1- 1 208 961
- EP-A1- 1 526 285
- EP-A1- 2 039 884
- EP-A2- 1 801 354

## Description

### Arrière-plan de l'invention

L'invention concerne la fabrication d'aubes de turbomachine en matériau composite à plate-forme et/ou talon intégrés.

Le domaine visé est celui d'aubes de turbines à gaz pour moteurs aéronautiques ou turbines industrielles.

La réalisation d'aubes en matériau composite pour des turbomachines a déjà été proposée. On pourra se référer par exemple au document EP 1 526 285 qui décrit la fabrication d'une aube de soufflante par réalisation d'une préforme fibreuse par tissage tridimensionnel et densification de la préforme par une matrice.

Par ailleurs, pour la réalisation de pièces structurales de turbomachine exposées en service à des températures élevées, l'utilisation de matériaux composites thermostructuraux et notamment de matériaux composites à matrice céramique (CMC) a déjà été proposée. En effet, par rapport à des alliages métalliques, de tels matériaux peuvent présenter une tenue améliorée aux températures élevées et ont une moindre masse tout en ayant les propriétés mécaniques requises pour constituer des pièces structurales. Or, en particulier pour des turbines à gaz de moteurs aéronautiques, la diminution de masse et la réduction d'émissions polluantes par augmentation de la température sont recherchées.

Le document EP 1 801 354 décrit la formation séparée d'une préforme de pale et pied d'aube et d'une préforme de plate-forme par drapage de strates pré-imprégnées par une résine et polymérisation partielle de la résine. La préforme de plate-forme a des joues qui viennent se placer contre des faces opposées de la préforme de pale et pied d'aube, au niveau du pied. Après poursuite de la polymérisation, une imprégnation par un liant (silicium) est réalisée pour coller les joues de la plate-forme sur les faces opposées du pied d'aube.

La rigidification apportée par la pré-polymérisation limite la complexité de la forme possible pour le profil de pale.

### Objet et résumé de l'invention

Il est donc souhaitable de pouvoir disposer d'aubes de turbomachine en matériau composite, notamment en matériau composite thermostructural tel qu'en CMC, pour des turbines ou compresseurs de turbomachines, aubes qui présentent les propriétés mécaniques requises tout en ayant des formes relativement complexes.

A cet effet, selon la présente invention, il est proposé un procédé de fabrication d'une aube de turbomachine en matériau composite à plate-forme et/ou talon intégré, le procédé comprenant la réalisation séparée d'un élément de plate-forme ou talon d'aube comprenant un renfort fibreux rigidifié et ayant une forme voisine d'une plate-forme ou d'un talon de l'aube à fabriquer, au moins une ouverture ayant une forme de profil de pale de l'aube à fabriquer étant formée dans l'élément de plate-forme ou talon, l'engagement de l'élément de plate-forme ou talon par son ouverture sur une préforme de pale et pied d'aube à renfort fibreux et l'assemblage de l'élément de plate-forme ou talon avec la préforme de pale et pied d'aube , procédé selon lequel :
- une ébauche fibreuse souple en une seule pièce comprenant des parties de préforme de pale et pied d'aube est réalisée par tissage tridimensionnel,
- l'élément de plate-forme ou talon est engagé par son ouverture sur l'ébauche fibreuse souple avec déformation de celle-ci, pour assemblage de l'élément de plate-forme ou talon avec l'ébauche fibreuse,
- une mise en forme de l'ébauche fibreuse avec l'élément de plate-forme ou talon assemblé est réalisée pour obtenir une préforme d'aube ayant une forme voisine de celle de l'aube à fabriquer,
- après mise en forme, la préforme d'aube est consolidée dans sa forme dans un conformateur, et
- une densification finale de la préforme d'aube consolidée est réalisée pour obtenir une aube en matériau composite à plate-forme ou talon intégré.

Avantageusement, l'ébauche est réalisée avec en outre des parties de liaison déployables pour superposition et liaison à l'élément de plate-forme ou talon après engagement de celui-ci. Lors du tissage de l'ébauche, des zones de déliaison peuvent être aménagées pour faciliter le déploiement des parties de liaison.

Selon une particularité du procédé, une liaison de l'élément de plate-forme ou talon avec l'ébauche fibreuse est réalisée par couture ou épinglage avant l'introduction de la matrice ou est réalisée par codensification .

La consolidation de la préforme peut être réalisée par infiltration chimique en phase gazeuse ou par imprégnation par une composition de consolidation contenant une résine, puis réticulation de la résine. Dans ce dernier cas, l'imprégnation de l'ébauche peut être réalisée avant mise en forme.

Avantageusement, une pluralité d'ébauches fibreuses sont tissées dans une bande continue et des ébauches individuelles sont découpées dans la bande tissée.

Avantageusement encore, une pluralité d'éléments de plate-forme ou talon sont découpés dans un profilé obtenu par mise en forme de plusieurs couches fibreuses liées entre elles et rigidification.

La rigidification de l'élément de plate-forme ou talon est réalisée à une étape intermédiaire de fabrication. Elle peut être obtenue par infiltration chimique en phase gazeuse ou par imprégnation par une composition de rigidification comprenant une résine, puis réticulation de la résine.

Lorsque l'ébauche fibreuse est consolidée par une imprégnation par une composition de consolidation contenant une résine et l'élément de plate-forme est rigidifié par imprégnation par une composition de rigidification contenant une résine, la résine de consolidation de l'ébauche fibreuse et la résine de rigidification de l'élément de plate-forme ou de talon peuvent être pyrolysées simultanément.

Le procédé est applicable à la fabrication d'une aube multi-pales et comprend à cet effet les étapes de :
- réalisation par tissage tridimensionnel de plusieurs ébauches fibreuses en une seule pièce comprenant chacune des parties de préforme de pale et de pied d'aube,
- réalisation séparée de l'élément de plate-forme ou talon d'aube présentant plusieurs ouvertures en forme de profil de pale, et
- engagement de l'élément de plate-forme ou talon par ses ouvertures simultanément sur les ébauches fibreuses.

### Brève description des dessins

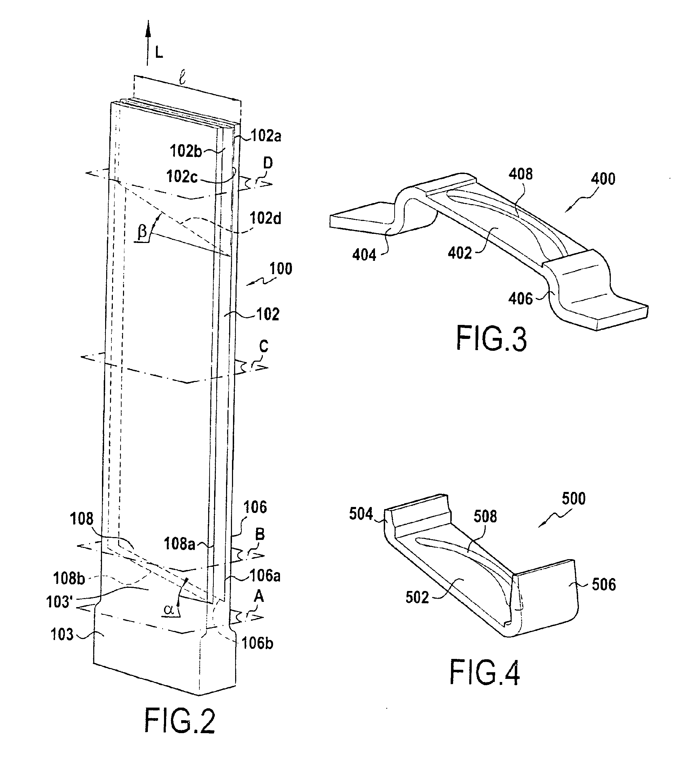

L'invention sera mieux comprise à la lecture de la description faite ci-après, à titre indicatif mais non limitatif, en référence aux dessins annexés sur lesquels :
- la figure 1 est une vue en perspective d'une aube de turbomachine à plate-forme et talon intégrés ;
- la figure 2 est une vue schématique en perspective d'une ébauche fibreuse comprenant des parties de préforme de pale et de pied d'aube ;
- la figure 3 est une vue schématique en perspective à échelle agrandie d'un élément rigidifié de plate-forme d'aube ;
- la figure 4 est une vue schématique en perspective à échelle agrandie d'un élément rigidifié de talon d'aube ;
- les figures 5 à 9 illustrent schématiquement la formation d'une préforme d'aube par assemblage de l'ébauche de la figure 2 avec les éléments de plate-forme et de talon des figures 3 et 4 ;
- la figure 10 illustre très schématiquement une préforme d'aube ;
- les figures 11A à 11D sont des vues en coupe transversale à échelle agrandie de l'ébauche fibreuse de la figure 2 selon différents plans A, B, C et D ;
- la figure 12 est une vue en coupe trame montrant un exemple de réalisation de la partie de l'ébauche fibreuse de la figure 2 correspondant à une partie de préforme de pied de pale ;
- la figure 13 est une vue en coupe trame montrant un autre exemple de réalisation de la partie de l'ébauche fibreuse de la figure 2 correspondant à une partie de préforme de pied de pale ;
- la figure 14 montre très schématiquement un mode de réalisation d'une bande tissée continue obtenue par tissage tridimensionnel et comprenant une pluralité d'ébauches fibreuses telles que celle de la figure 2 ;
- la figure 15 est une vue très schématique partielle en coupe selon le plan XV de la figure 14 ;
- la figure 16 montre très schématiquement un autre mode de réalisation d'une bande tissée continue obtenue par tissage

tridimensionnel et comprenant une pluralité d'ébauches fibreuses telles que celle de la figure 2 ;

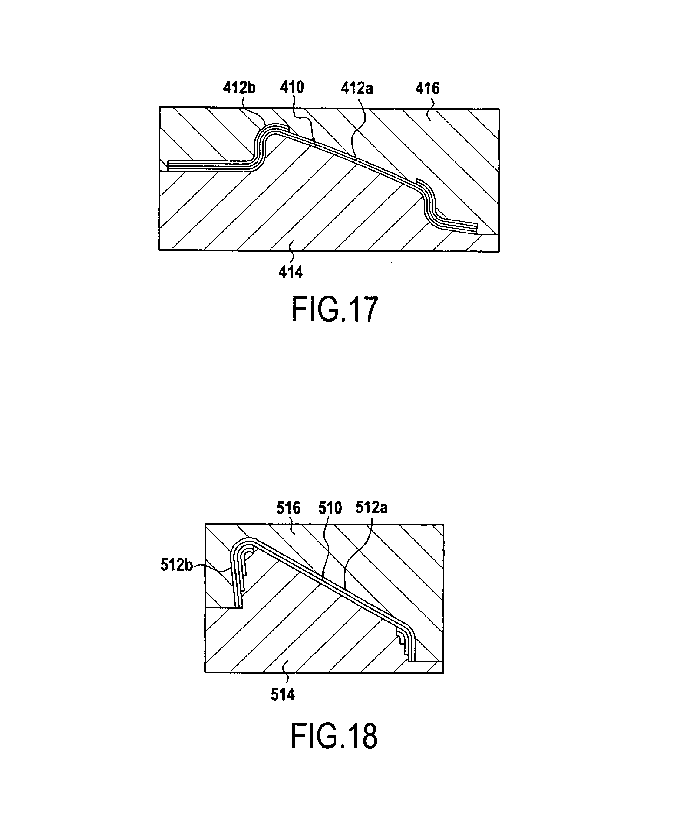

- la figure 17 est une vue schématique en coupe illustrant la réalisation d'un profilé fibreux pour obtenir des éléments de plate-forme tels que celui de la figure 3 ;
- la figure 18 est une vue schématique en coupe illustrant la réalisation d'un profilé fibreux pour obtenir des éléments de talon tels que celui de la figure 4 ;

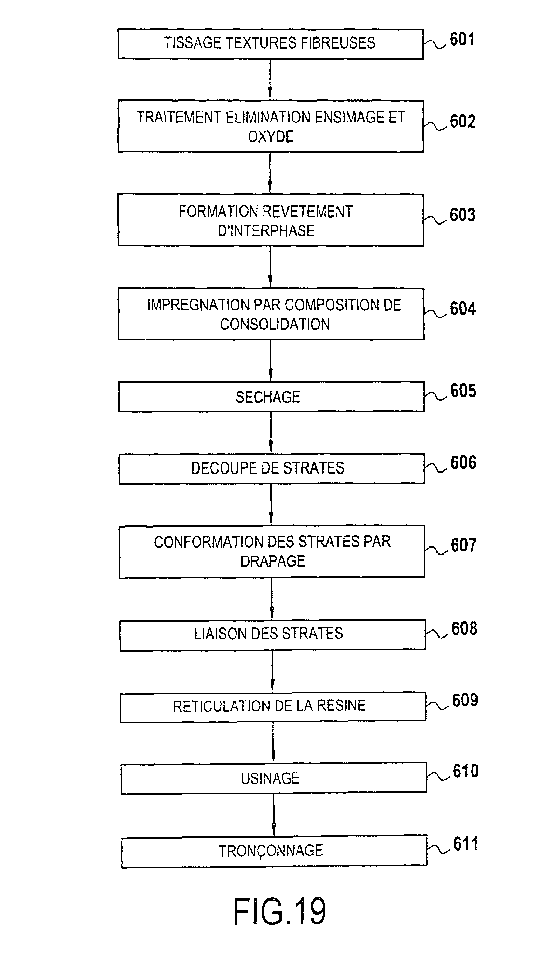

- la figure 19 indique des étapes successives d'un mode de réalisation d'un élément de plate-forme ou de talon tel que celui de la figure 3 ou de la figure 4 ;

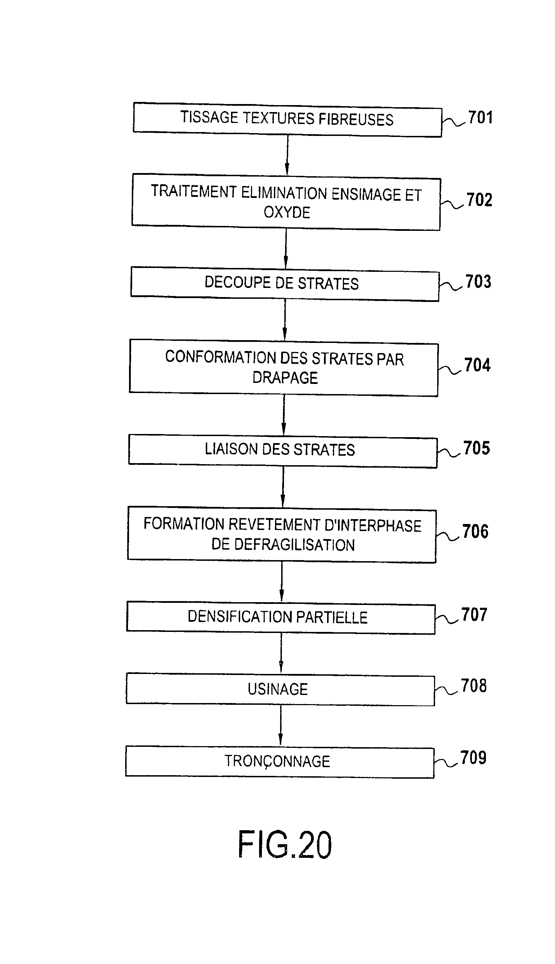

- la figure 20 indique des étapes successives d'un autre mode de réalisation d'un élément de plate-forme ou de talon tel que celui de la figure 3 ou de la figure 4 ;

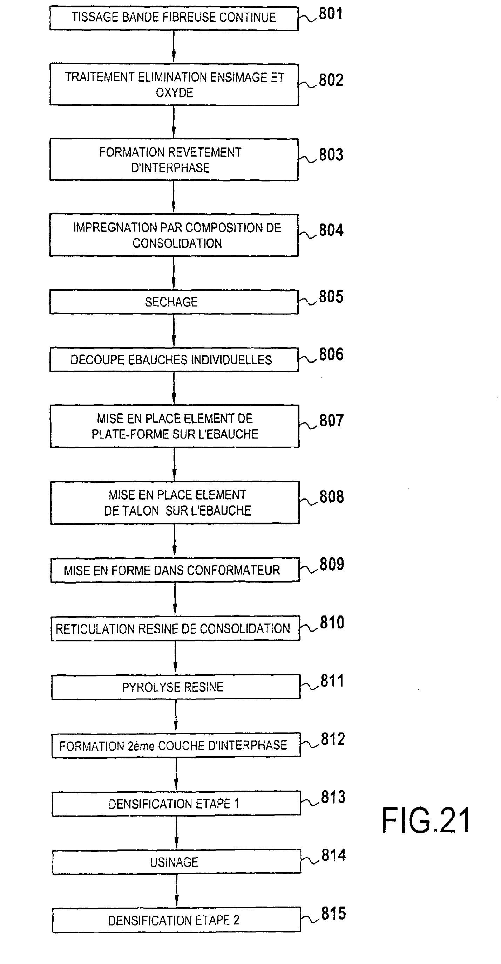

- la figure 21 indique des étapes successives d'un mode de réalisation d'une aube de turbomachine conformément à l'invention ;

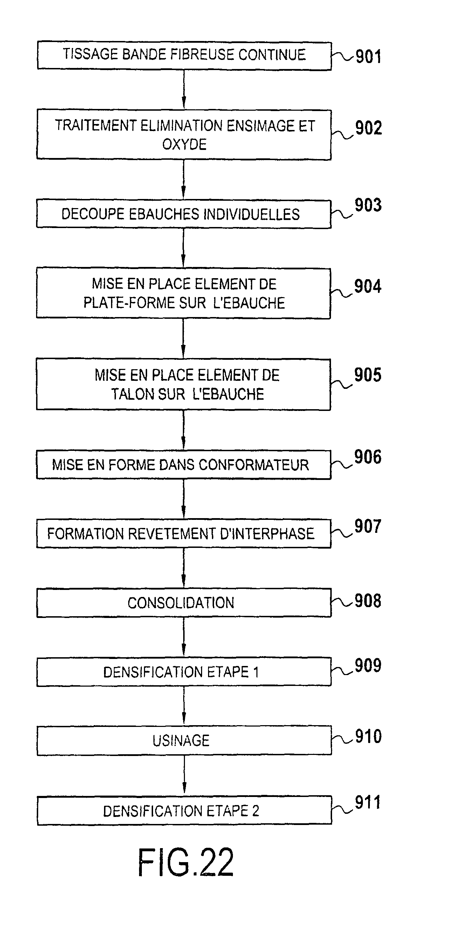

- la figure 22 indique des étapes successives d'un autre mode de réalisation d'une aube de turbomachine conformément à l'invention ;

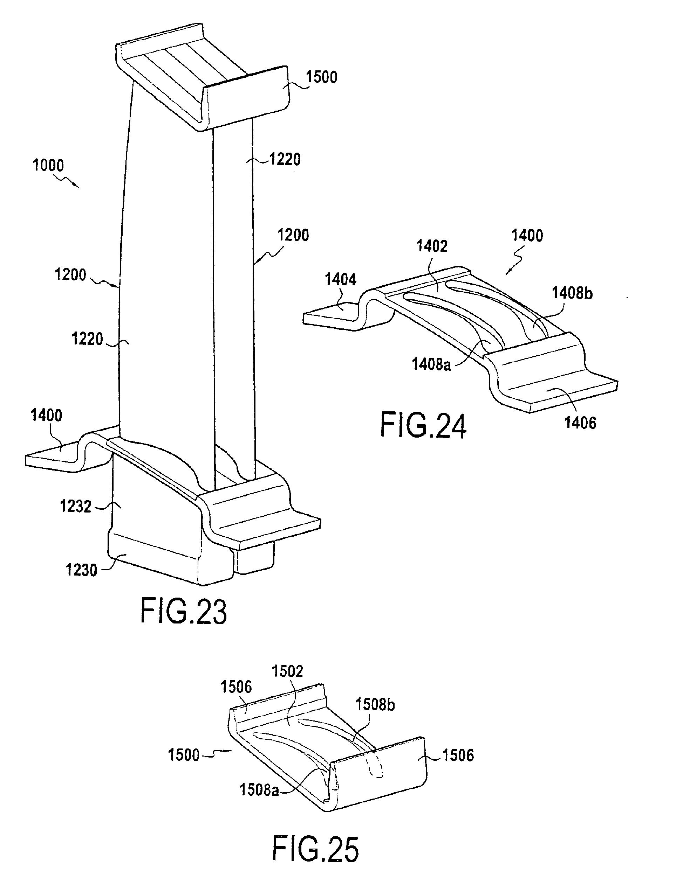

- la figure 23 montre schématiquement en perspective une préforme d'aube bi-pale selon un autre mode de réalisation de l'invention ;
- la figure 24 montre schématiquement en perspective un élément de plate-forme pour l'aube de la figure 23 ; et
- la figure 25 montre schématiquement en perspective un élément de talon pour l'aube de la figure 23.

### Description détaillée de modes de réalisation

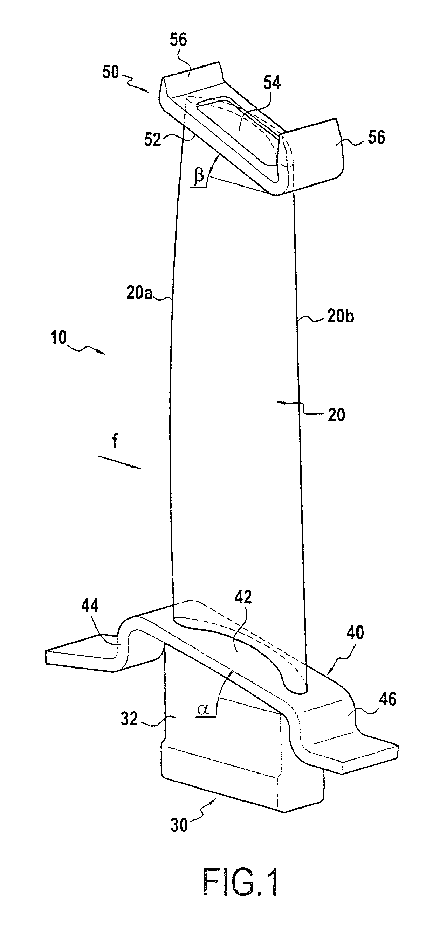

L'invention est applicable à différents types d'aubes de turbomachine à plate-forme et/ou talon intégrés, notamment des aubes de compresseur et de turbine de différents corps de turbine à gaz, par exemple une aube de roue mobile de turbine basse pression (BP) telle que celle illustrée par la figure 1.

L'aube 10 de la figure 1 comprend, de façon en soi bien connue, une pale 20, un pied 30 formé par une partie de plus grande épaisseur, par exemple un pied à section en forme de bulbe prolongé par une échasse 32, une plate-forme intérieure 40 située entre le pied 30 et la pale 20 et une plate-forme extérieure ou talon 50 au voisinage de l'extrémité libre de la pale.

La pale 20 s'étend en direction longitudinale entre la plate-forme 40 et le talon 50 et présente en section transversale un profil incurvé d'épaisseur variable entre son bord d'attaque 20a et son bord de fuite 20b.

L'aube 10 est montée sur un rotor de turbine (non représenté) par engagement du pied 30 dans un logement de forme correspondante aménagé à la périphérie du rotor de turbine. Le pied se prolonge par l'échasse 32 pour se raccorder à la face interne (ou inférieure) de la plate-forme 40.

A son extrémité radiale interne, la pale 20 se raccorde à la plate-forme 40 sur une face externe (ou supérieure) 42 de la plate-forme qui délimite, à l'intérieur, la veine d'écoulement de flux gazeux dans la turbine. Dans ses parties d'extrémité amont et aval (dans le sens f d'écoulement du flux gazeux), la plate forme 40 se termine par des becquets 44, 46. Dans l'exemple illustré, la face 42 de la turbine est inclinée en formant globalement un angle non nul α par rapport au plan normal à la direction longitudinale de l'aube. Selon le profil souhaité de la surface intérieure de la veine d'écoulement du flux gazeux, l'angle α pourrait être nul, ou la face 42 pourrait avoir un profil non rectiligne, par exemple incurvé.

A son extrémité radiale externe, la pale 20 se raccorde au talon 50 sur une face interne (inférieure) du talon 52 qui délimite, à l'extérieur, la veine d'écoulement du flux gazeux. Du côté externe (supérieur), le talon 50 délimite une dépression, ou baignoire 54. Le long des bords amont et aval de la baignoire, le talon porte des lèchettes 56 à profil en forme de dents dont les extrémités peuvent pénétrer dans une couche de matériau abradable d'un anneau de turbine (non représenté) pour réduire le jeu entre le sommet d'aube et l'anneau de turbine. Dans l'exemple illustré, la face interne 52 est inclinée en formant généralement un angle β par rapport à un plan normal à la direction longitudinale de l'aube. En variante, selon le profil souhaité de la surface extérieure de la veine d'écoulement du flux gazeux, la face 52 pourrait être sensiblement perpendiculaire à la direction longitudinale de l'aube ou la face 52 pourrait avoir un profil globalement non rectiligne, par exemple incurvé.

La figure 2 montre schématiquement une ébauche fibreuse 100 à partir de laquelle une partie de préforme de pale de pied d'aube peut être obtenue.

L'ébauche fibreuse 100 est obtenue par tissage tridimensionnel multicouches comme décrit plus loin. L'ébauche 100 s'étend de façon générale dans une direction L correspondant à la direction longitudinale de l'aube à réaliser. Dans sa partie 102 destinée à former une préforme de pale, l'ébauche 100 a une épaisseur variable déterminée en fonction de l'épaisseur du profil de la pale de l'aube à réaliser et une largeur l choisie en fonction de la longueur du profil développé (à plat) de la pale et du pied de l'aube à réaliser.

Dans sa partie 103 destinée à former une préforme de pied d'aube, l'ébauche 100 présente une sur-épaisseur déterminée en fonction de l'épaisseur du pied de l'aube à réaliser.

L'ébauche fibreuse 100 comprend en outre des parties latérales 106, 108 qui s'étendent à partir de la partie 103, de chaque côté de la partie 102. A partir d'un emplacement correspondant sensiblement à celui de la plate-forme d'aube et jusqu'à l'extrémité extérieure de la partie 102, les parties 106, 108 ne sont pas liées à la partie 102, des zones de déliaison 106a, 108a étant aménagées lors du tissage de l'ébauche fibreuse. On notera que les zones de déliaison ont leur origine à partir de lignes 106b, (en tirets sur la figure 2) et 108b qui forment un angle α par rapport à un plan normal à la direction L. Les lignes 106b et 108b pourraient en variante être courbes.

Entre la partie 103 sur-épaissie et les lignes 106b et 108b, les parties prolongeant les parties 102, 106 et 108 sont liées entre elles pour former une partie 103' destinée à former une préforme d'échasse d'aube.

La partie 102 présente en outre une zone de déliaison 102c qui sépare sa partie d'extrémité extérieure en deux ailes 102a, 102b. On notera que la zone de déliaison 102c s'étend jusqu'à l'extrémité de la partie 102 à partir d'une ligne 102d (en tirets sur la figure 2) qui se situe sensiblement à l'emplacement du talon d'aube et qui, dans l'exemple illustré, est inclinée en formant un angle ß par rapport à un plan normal à la direction L. La ligne 102d pourrait en variante être courbe.

La figure 3 montre un élément de plate-forme 400 formé de couches fibreuses superposées et liées entre elles et rigidifié en forme, comme décrit plus loin. L'élément de plate-forme 400 reproduit sensiblement la forme de la plate-forme de l'aube à réaliser avec une partie centrale 402 et des parties d'extrémité 404, 406 formant becquets. La partie centrale 402 présente une épaisseur réduite, inférieure à celle des parties d'extrémité 404, 406. Dans la partie centrale 402, une ouverture traversante ou lumière 408 est formée qui reproduit sensiblement le profil de l'aube à fabriquer au niveau du raccordement avec la plate-forme.

La figure 4 montre un élément de talon 500 formé de couches fibreuses superposées et liées entre elles et rigidifié en forme, comme décrit plus loin. L'élément de talon 500 reproduit sensiblement la forme à section en U du talon de l'aube à réaliser avec une partie centrale 502 et des parties d'extrémités relevées 506 se terminant par des extrémités amincies. La partie centrale 502 présente une épaisseur réduite, inférieure à celle des parties d'extrémité 506. Dans la partie centrale 502, une ouverture traversante ou lumière 508 est formée qui reproduit sensiblement le profil de l'aube à fabriquer au niveau du raccordement avec le talon.

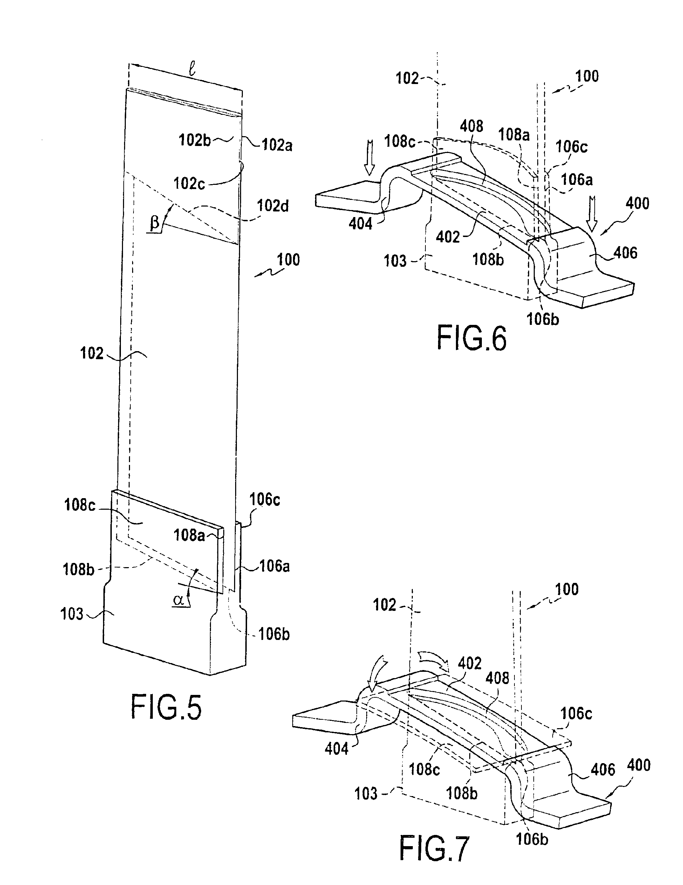

Une préforme d'aube est réalisée par assemblage de l'ébauche 100 avec les éléments de plate-forme 400 et de talon 500 comme montré sur les figures 5 à 9.

Les parties latérales 106, 108 sont découpées pour ne laisser subsister que des ailes 106c, 108c s'étendant sur une distance limitée à partir des lignes 106b, 108b (figure 5).

L'élément de plate-forme 400 est mis en place en introduisant l'extrémité extérieure de la partie 102 de l'ébauche 100 dans la lumière 408, avec déformation de l'ébauche 100 pour épouser le profil de la lumière 408. On fait coulisser l'élément de plate-forme 400 sur l'ébauche 100 jusqu'à venir au niveau de l'origine des zones de déliaison 106a, 108a, les ailes 106c, 108c étant engagées dans la lumière 408 qui est dimensionnée à cet effet (figure 6).

A ce stade, les ailes 106c, 108c sont déployées pour être rabattues contre la face externe (supérieure) de la partie centrale 402 d'épaisseur réduite de l'élément de plate-forme 400, la longueur et l'épaisseur des ailes étant choisies pour obtenir une épaisseur de préforme de plate-forme sensiblement constante (figure 7). Les ailes 106c, 108c peuvent alors être liées à la partie centrale 402 de l'élément de plate-forme 400 par exemple par couture ou de préférence par épinglage (introduction d'éléments de liaison rigide) et les surlongueurs des ailes 104a, 104b sont coupées. Un procédé de liaison par épinglage est décrit dans le document US 7 200 912.

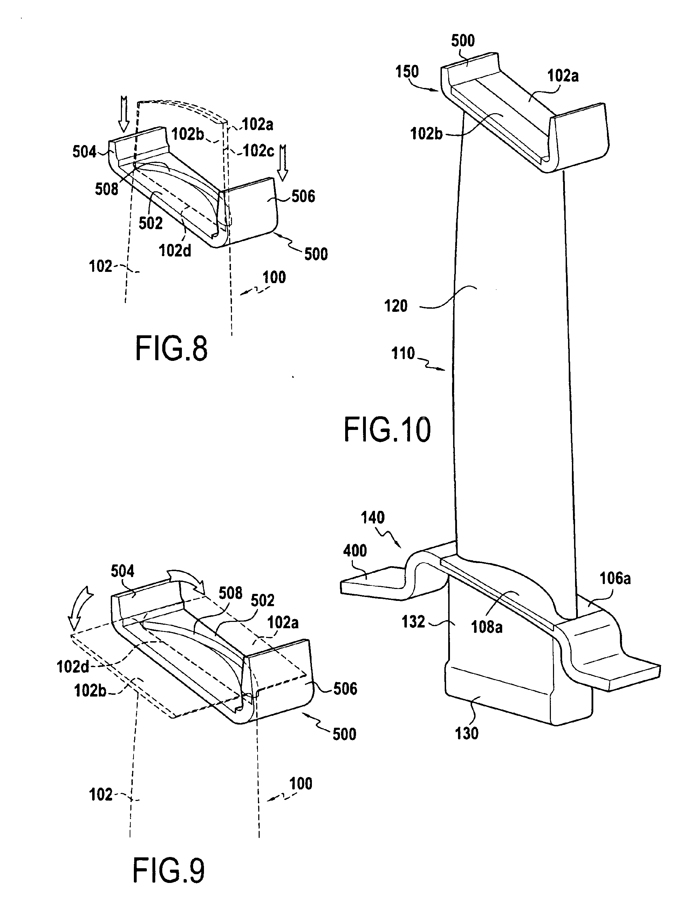

L'élément de talon 500 est mis en place en introduisant l'extrémité externe de l'ébauche 100 dans la lumière 508, avec déformation de l'ébauche 100 pour épouser le profil de la lumière 508. On fait coulisser l'élément de talon 500 sur l'ébauche 100 jusqu'au niveau du fond de la zone de déliaison 102c (figure 8).

A ce stade, des ailes 102a, 102b sont déployées pour être rabattues contre la face externe (supérieure) de la partie centrale d'épaisseur réduite 502 de l'élément de talon 500, de sorte que l'on obtient une épaisseur de préforme de talon sensiblement constante (figure 9). Les ailes 102a, 102b peuvent alors être liées à la partie centrale 502 de l'élément de talon 500 par exemple par couture ou de préférence par épinglage et les surlongueurs des ailes 102a, 102b sont coupées.

On obtient alors une préforme d'aube 200 ayant des parties de préforme de pale 120, de pied 130 et d'échasse 132 dérivées de l'ébauche fibreuse 100 et les parties de préformes de plate-forme 140 et de talon 150 formées par les éléments de plate-forme 400 et de talon 500 et les ailes 106c, 108c et 102a, 102b (figure 10).

On notera que les éléments de plate-forme 400 et de talon 500 pourraient en variante être simplement assemblés à l'ébauche 100, une liaison effective étant obtenue ultérieurement par codensification lors d'une consolidation de la préforme d'aube ou de la densification de la préforme d'aube par une matrice, comme décrit plus loin.

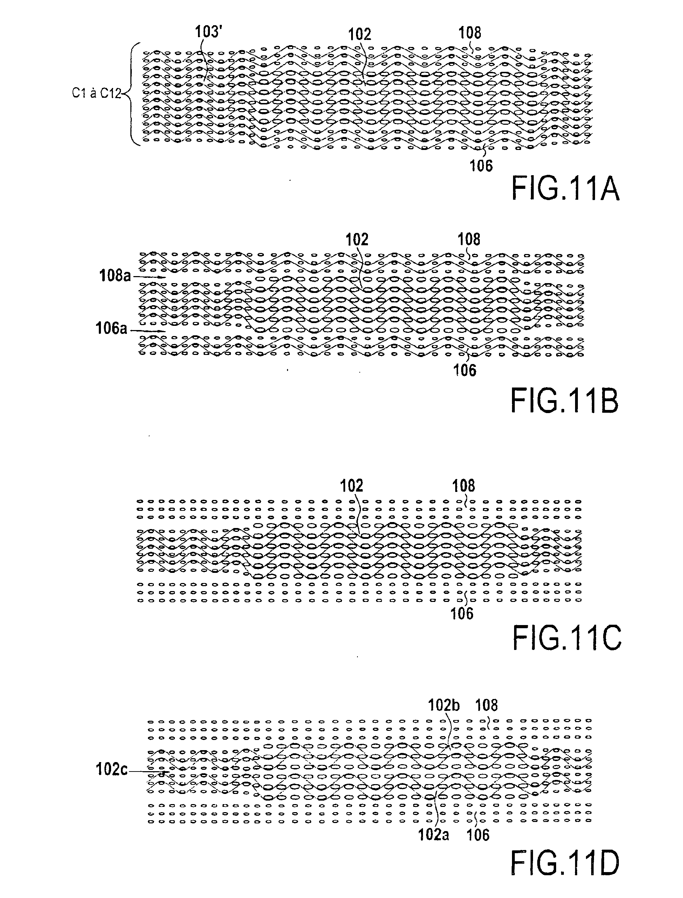

Un mode de tissage tridimensionnel de l'ébauche fibreuse 100 sera maintenant décrit plus en détail en référence aux figures 2 et 11A à 11D.

Il est supposé que le tissage est réalisé avec des fils de chaîne s'étendant dans la direction longitudinale L de l'ébauche, étant noté qu'un tissage avec des fils de trame s'étendant dans cette direction est également possible.

La variation d'épaisseur de la partie 102 de l'ébauche 100 sur sa largeur, pour reproduire le profil d'épaisseur variable de pale, est obtenue en utilisant des fils de chaîne de titre variable dans l'ensemble de couches de fils de chaîne de la partie 102 de l'ébauche. On pourrait en variante, ou en complément, faire varier la contexture des fils de chaîne (nombre de fils par unité de longueur en sens trame), une contexture plus faible autorisant un amincissement plus important lors de la mise en forme de l'ébauche fibreuse.

Dans l'exemple illustré sur les figures 11A à 11D, on utilise dans la partie 102, pour le profil de pale désiré, six couches de fils de chaîne de titres variables. Les fils peuvent avoir deux titres différents. Dans un exemple de réalisation, les fils utilisés peuvent être des fils essentiellement en carbure de silicium (SiC) tels que les fils fournis sous la dénomination "Nicalon" par la société japonaise Nippon Carbon et ayant un titre de 0,5 K (500 filaments). La chaîne est alors par exemple formée avec des fils de 0,5 K et des fils de 1 K obtenus par réunion de deux fils de 0,5 K, les deux fils étant réunis par guipage. Le guipage est réalisé avantageusement avec un fil à caractère fugace susceptible d'être éliminé après tissage, par exemple un fil en alcool polyvinylique (PVA) éliminable par dissolution dans l'eau.

Toujours dans l'exemple illustré, on utilise pour chacune des parties latérales 106, 108 un ensemble de 3 couches de fils de chaîne, ce qui porte le nombre total de couches de fils de chaîne à 12.

Bien entendu, les nombres de couches de fils de chaîne pour les parties 102, 106 et 108 pourront être différents de ceux indiqués ici, en fonction notamment des titres des fils utilisés et des épaisseurs désirées.

Dans la partie 103' correspondant à l'échasse de l'aube à réaliser (figure 11A), toutes les couches de fils de chaîne c1 à c12 sont toutes liées entre elles par des fils de trame par tissage par exemple de type "interlock". Par tissage "interlock" on entend ici une armure de tissage dans laquelle chaque couche de fils de trame lie plusieurs couches de fils de chaîne (2 dans l'exemple illustré) avec tous les fils d'une même colonne de trame ayant le même mouvement dans le plan de l'armure.

Dans la partie correspondant à la zone de l'ébauche comprenant les ailes 106c, 108c (figure 11B), les couches de fils de chaîne de la partie de pale 102 sont liées entre elles par des fils de trame par tissage interlock, les couches de fils de chaîne de la partie latérale 106 sont liées entre elles par des fils de trame par tissage interlock et les couches de fils de chaîne de la partie latérale 108 sont liées par des fils de trame par tissage interlock. Par contre, on ne réalise pas de liaison par fils de trame entre les couches de fils de chaîne de la partie 102 et celles de la partie 106 de même qu'entre les couches de fils de chaîne de la partie 102 et celles de la partie 108, de manière à obtenir les déliaisons 106a, 108a.

L'inclinaison d'un angle α des lignes de fond ou d'origine des déliaisons 106a, 108a ou une forme incurvée de ces lignes est obtenue en faisant varier cette origine dans l'ensemble des plans de chaîne.

Dans la partie correspondant à la partie 102 de l'ébauche 100 non bordée par les ailes 106c, 108c (figure 11C) le tissage des deux ensembles de fils de chaîne dans les parties latérales 106, 108 est de préférence omis (pas d'introduction de fils de trame).

Dans la partie correspondant à l'extrémité externe de la partie 102 de l'ébauche 100 (figure 11D), l'ensemble de couches de fils de chaîne formant la partie 102 est séparé en deux sous-ensembles non liés entre eux pour ménager la zone de déliaison 102c entre les ailes 102a, et 102b. L'inclinaison d'un angle ß de la ligne de fond ou d'origine de la déliaison 102c ou une forme incurvée de cette ligne est obtenue en faisant varier cette origine dans l'ensemble des plans de chaîne.

Bien que l'on ait envisagé ci-avant un tissage tridimensionnel de type interlock, d'autres modes de tissage multicouches pourront être adoptés, par exemple un tissage à armure multi-satin ou un tissage à armure multi-toile comme décrit dans le document WO 2006/136755.

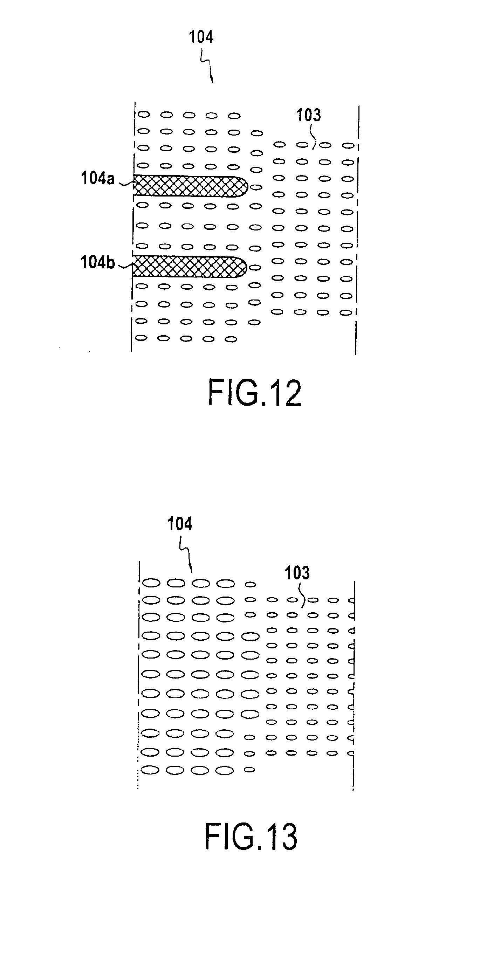

Selon un mode de réalisation illustré par la figure 12 (où seuls les fils de trame vus en coupe sont représentés), la surépaisseur 103 est obtenue en introduisant, après tissage, des inserts 104a, 104b entre des couches de fils de trame non liées à ce niveau. Bien entendu, un seul insert ou plus de deux inserts pourront être utilisés. Les inserts peuvent être constitués de blocs de céramique monolythique, par exemple des blocs de SiC, obtenus par frittage de poudre SiC. Le maintien des inserts à leurs emplacements désirés dans l'ébauche fibreuse peut être assuré par la texture tissée de l'ébauche ou par le moule ou conformateur utilisé ultérieurement pour obtenir une préforme d'aube, comme décrit plus loin.

Selon un autre mode de réalisation illustré par la figure 13 (où seuls les fils de trame vus en coupe sont représentés), la surépaisseur 104 est obtenue en utilisant des fils de trame de titre plus élevé. Dans le cas d'une ébauche tissée en fils essentiellement en SiC tels que des fils de 0,5 K fournis par la société Nippon Carbon sous la dénomination "Nicalon", des fils de titre plus élevé peuvent être obtenus par réunion par guipage de plusieurs fils de 0,5 K, comme décrit plus haut.

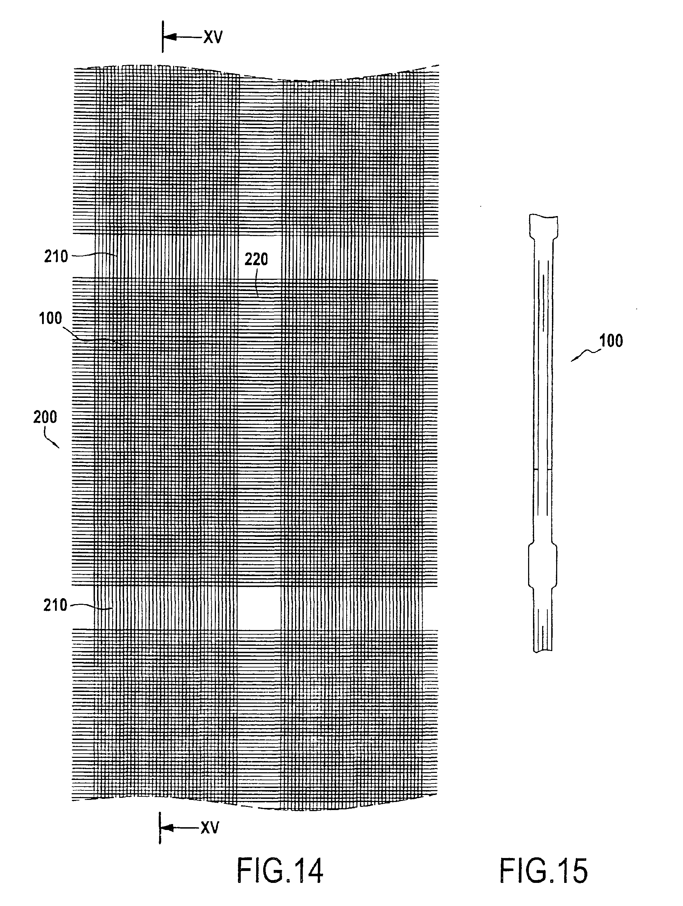

Comme le montrent très schématiquement les figures 14 et 15, une pluralité d'ébauches fibreuses 100 peut être obtenue par tissage d'une bande 200 dans laquelle sont formées une ou plusieurs rangées d'ébauches fibreuses successives. Des zones de sur-longueurs 210, 220 sont ménagées en sens chaîne (uniquement fils de chaîne) et en sens trame (uniquement fils de trame) pour éviter des phénomènes de bord liés au tissage, laisser une plus grande liberté de déformation lors de la mise en forme de la préforme et aménager des zones de transition entre ébauches 100.

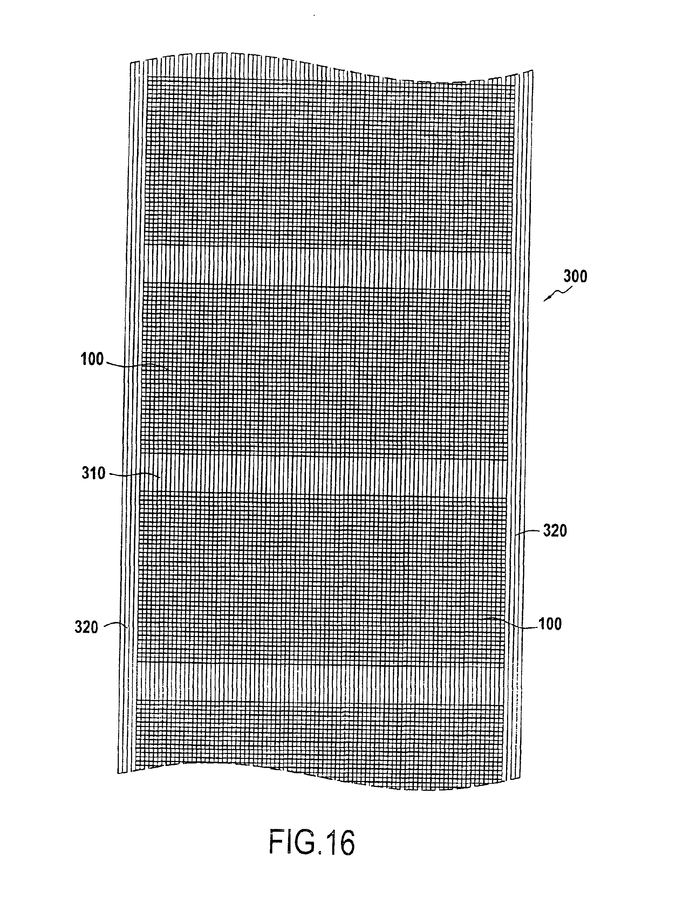

La figure 16 montre une variante de réalisation selon laquelle une bande 300 est réalisée avec une rangée d'ébauches 100 tissées en sens trame perpendiculairement à la direction longitudinale de la bande. Des zones de sur-longueurs 310, 320 sont également ménagées en sens chaîne et en sens trame. Plusieurs rangées d'ébauches 100 peuvent être tissées, la largeur de la bande 300 étant adaptée à cet effet.

Avantageusement, on obtient une pluralité d'éléments de plate-forme 400 par découpe en tronçons d'un profilé fibreux rigidifié dans lequel des ouvertures ou lumières 408 ont été pratiquées.

Un profilé fibreux 410 est obtenu par superposition et conformation de strates fibreuses (figure 17). Plusieurs strates fibreuses 412a s'étendent sur toute la longueur du profil tandis que d'autres strates 412b s'étendent sur une partie seulement de la longueur du profil pour ménager une partie centrale de moindre épaisseur correspondant à la partie 402 des éléments de plate-forme.

Les strates 412a, 412b sont par des exemples des couches de tissu obtenu par tissage tridimensionnel (3D) ou multicouches. On pourra utiliser des tissus 3D à armure "interlock" ou à armature multi-satin ou multi-toile, comme décrit notamment dans le document WO 2006/136755.

Les strates de tissu 3D superposées et conformées sont de préférence liées entre elles par exemple par couture ou par épinglage.

La conformation des strates est réalisée par drapage sur une forme 414 permettant de conférer le profil souhaité et le maintien du profilé dans la forme souhaitée lors de sa rigidification par densification partielle, comme décrit plus loin, peut être assuré par disposition du profilé fibreux 410 entre la forme 414 et un contre-moule 416.

De façon similaire, on obtient avantageusement une pluralité d'éléments de talon 500 par découpe en tronçons d'un profilé fibreux rigidifié dans lequel des ouvertures ou lumières 508 ont été pratiquées.

Un profilé fibreux 510 est obtenu par superposition et conformation de strates fibreuses (figure 18). Plusieurs strates 512a s'étendent sur toute la longueur du profil tandis que d'autres strates 512b s'étendent sur une partie seulement de la longueur du profil pour ménager une partie centrale de moindre épaisseur correspondant à la partie 520 des éléments de talon.

Les strates 512a, 512b peuvent être des couches de tissus 3D éventuellement liées entre elles après conformation comme décrit ci-avant pour les strates 412a, 412b.

La conformation est réalisée par drapage sur une forme 514 et le maintien en forme pendant la rigidification du profilé est obtenu en interposant celui-ci entre la forme 514 et un contre-moule 516.

Des étapes successives d'un procédé de fabrication d'éléments de plate-forme 400 ou de talon 500 sont indiquées sur la figure 18.

A l'étape 601, des textures fibreuses sont obtenues par tissage 3D. Pour une application à une aube de turbomachine destinée à une utilisation à température élevée et plus particulièrement en environnement corrosif (notamment humidité), on utilise pour le tissage des fils formés de fibres en céramique, notamment des fibres SiC.

A l'étape 602, les textures fibreuses tissées sont traitées pour éliminer l'ensimage présent sur les fibres et la présence d'oxyde à la surface des fibres. L'élimination de l'oxyde est obtenue par traitement acide, notamment par immersion dans un bain d'acide fluorhydrique. Si l'ensimage n'est pas éliminable par le traitement acide, un traitement préalable d'élimination de l'ensimage est effectué, par exemple un bref traitement thermique de décomposition de l'ensimage.

Une mince couche de revêtement d'interphase est formée sur les fibres des textures fibreuses par infiltration chimique en phase gazeuse ou CVI ("Chemical Vapor Infiltration") de façon en soi bien connue (étape 603). Le matériau du revêtement d'interphase est par exemple du carbone pyrolytique (PyC), du nitrure de bore BN ou du carbone dopé au bore (BC avec par exemple 5%at à 20%at de B, le complément étant C). Le revêtement d'interphase a une épaisseur choisie suffisamment faible par exemple au plus égale à 100 nanomètres, voire ou plus égale à 50 nanomètres, pour préserver une bonne capacité de déformation.

A l'étape 604, les strates fibreuses sont imprégnées par une composition de rigidification, typiquement une résine diluée dans un solvant. On peut utiliser une résine précurseur de carbone, par exemple une résine phénolique ou furanique, ou une résine précurseur de céramique, par exemple une résine polysilazane ou polysiloxane précurseur de SiC.

Après séchage (étape 605), des strates sont découpées (étape 606) et les strates découpées sont conformées par drapage sur une forme (étape 607) et liées éventuellement entre elles par couture ou épinglage (étape 608).

Le profilé fibreux imprégné est maintenu en forme entre la forme de drapage et un contre-moule et un traitement thermique est réalisé pour réticulation et pyrolyse de la résine (étape 609). La quantité de résine est choisie pour réaliser une densification partielle permettant de rigidifier le profilé fibreux tout en laissant une porosité résiduelle significative, c'est-à-dire sans densifier totalement le profilé fibreux.

A l'étape 610, un usinage est réalisé permettant d'amener le profilé rigididié aux dimensions voulues. En outre, les lumières sont formées, par exemple par usinage au jet d'eau sous pression.

A l'étape 611, les éléments de plate-forme ou de talon sont obtenus par tronçonnage du profilé rigidifié.

On notera que les lumières peuvent être formées après découpe des éléments de plate-forme ou de talon plutôt que sur le profilé rigidifié.

Des étapes successives d'un autre procédé de fabrication d'élément de plate-forme ou de talon sont indiquées sur la figure 20.

Après des étapes 701 et 702 de tissage de textures fibreuses et d'élimination d'ensimage et d'oxyde, semblables aux étapes 601 et 602, les strates sont découpées dans les textures fibreuses tissées (étape 703).

Les strates découpées sont conformées par drapage sur une forme (étape 704) et liées entre elles par couture ou épinglage (étape 705), formant un profilé fibreux.

Le profilé fibreux est maintenu en forme entre la forme de drapage et un contre-moule et un revêtement d'interphase de défragilisation est formé sur les fibres (étape 706). De façon en soi bien connue, un tel revêtement d'interphase protège les fibres vis-à-vis de la propagation de fissures au sein du matériau composite finalement obtenu. Le matériau du revêtement d'interphase est par exemple du carbone pyrolytique (PyC), du nitrure de bore (BN) ou du carbone dopé au bore (BC) comme mentionné plus haut. Le revêtement d'interphase est formé par exemple par CVI. A cet effet, la forme et le contre-moule utilisés pour la conformation et le maintien en forme du profilé fibreux sont de préférence en graphite et munis de trous pour faciliter le passage de la phase gazeuse réactionnelle donnant le dépôt du matériau d'interphase. L'épaisseur du revêtement d'interphase est de quelques dizaines à quelques centaines de nanomètres.

Ensuite (étape 707), une rigidification par densification partielle est réalisée par formation d'une matrice par CVI. Pour l'application envisagée à une aube de turbine, la matrice est de préférence en céramique, par exemple en SiC. La formation d'une matrice SiC par CVI est bien connue. La densification partielle est réalisée de manière suffisante pour rigidifier le profilé fibreux de façon suffisante pour être manipulé et subir des opérations d'usinage, mais tout en laissant une porosité résiduelle significative.

Ensuite, des étapes d'usinage (étape 708) et de tronçonnage (étape 709) du profilé fibreux rigidifié sont réalisées comme indiqué plus haut en référence aux étapes 610 et 611 de la figure 19.

Des étapes successives de réalisation d'une aube de turbine selon un mode de mise en oeuvre de l'invention seront maintenant décrites en référence à la figure 21.

A l'étape 801, une bande fibreuse continue est tissée par tissage tridimensionnel comprenant une pluralité d'ébauches fibreuses, par exemple plusieurs rangées d'ébauches fibreuses orientées en sens chaîne comme montré par les figures 14 ou 15. Pour des aubes de turbine destinées à une utilisation à température élevée, en particulier en environnement corrosif, on utilise pour le tissage des fils formés de fibres de céramique, par exemple des fils SiC.

A l'étape 802, la bande fibreuse est traitée pour éliminer l'ensimage présent sur les fibres et la présence d'oxyde à la surface des fibres, de la même manière qu'à l'étape 602 de la figure 19.

A l'étape 803, une couche mince de revêtement d'interphase est formée sur les fibres de la bande fibreuse par CVI. Le matériau du revêtement d'interphase est par exemple PyC, BN ou BC. La mince couche de revêtement d'interphase est de préférence de faible épaisseur, par exemple au plus égale à 100 nanomètres, voire au plus égale à 50 nanomètres, de manière à conserver une bonne capacité de déformation des ébauches fibreuses. De préférence, l'épaisseur est au moins égale à 10 nanomètres.

A l'étape 804, la bande fibreuse avec les fibres revêtues d'une mince couche de revêtement d'interphase est imprégnée par une composition de consolidation, typiquement une résine éventuellement diluée dans un solvant. On peut utiliser une résine précurseur de carbone, par exemple une résine phénolique ou furanique, ou une résine précurseur de céramique, par exemple une résine polysilazane ou polysiloxane précurseur de SiC.

Après séchage par élimination du solvant éventuel de la résine (étape 805), les ébauches fibreuses individuelles sont découpées, (étape 806).

Aux étapes 807 et 808, des éléments de plate-forme et de talon sont mis en place sur une ébauche. L'ébauche munie des éléments de plate-forme et de talon est mise en forme dans un moule ou conformateur, pour obtenir une préforme d'aube avec plate-forme et talon intégrés (étape 809).

Ensuite, la résine est réticulée (étape 810) et la résine réticulée est pyrolysée (étape 811). La réticulation et la pyrolyse peuvent être enchaînées par élévation progressive de la température avec la préforme maintenue dans le conformateur. Lorsque les éléments de plate-forme et de talon ont été rigidifiés par imprégnation par une composition contenant une résine et réticulation de la résine, la pyrolyse de cette résine de rigidification est réalisée en même temps que la pyrolyse de la résine de consolidation de l'ébauche mise en forme.

Après pyrolyse, on obtient une préforme fibreuse consolidée par le résidu de pyrolyse qui est retirée du conformateur. La quantité de résine de consolidation est choisie pour que le résidu de pyrolyse lie les fibres de la préforme de façon suffisante pour que celle-ci soit manipulable en conservant sa forme sans l'assistance d'un outillage, étant noté que la quantité de résine de consolidation est de préférence choisie aussi faible que possible.

Comme indiqué plus haut, la liaison effective entre les éléments de plate-forme et de talon et l'ébauche avec laquelle ils sont assemblés peut être réalisée seulement à ce stade de consolidation par codensification partielle par le résidu de pyrolyse de la résine.

Une deuxième couche d'interphase est formée par CVI (étape 812) afin d'obtenir globalement une interphase fibres-matrice ayant une épaisseur suffisante pour assurer sa fonction de défragilisation du matériau composite. La deuxième couche d'interphase peut être en matériau choisi parmi PyC, BN, BC, pas nécessairement le même que celui de la première couche d'interphase. L'épaisseur de la deuxième couche d'interphase est de préférence au moins égale à 100 nanomètres.

La réalisation d'une interphase en deux couches, comme indiquée ci-avant est préférée. Elle est décrite dans la demande de brevet, français déposée sous le N° 08 54937 par la demanderesse.

Une densification par une matrice de la préforme consolidée est ensuite réalisée par CVI, auquel cas la formation de la deuxième couche d'interphase et la densification par la matrice peuvent être enchaînées dans un même four.

La densification peut être réalisée en deux étapes successives (étapes 813 et 815) séparées par une étape 814 d'usinage aux dimensions désirées de l'aube. La deuxième étape de densification permet ainsi de revêtir des fibres éventuellement mises à nu lors de l'usinage.

Des étapes successives de réalisation d'une aube de turbine selon un autre mode de mise en oeuvre de l'invention seront maintenant décrites en référence à la figure 22.

L'étape 901 de tissage d'une bande fibreuse et l'étape 902 de traitement des fibres pour élimination d'ensimage et d'oxyde sont analogues aux étapes 801 et 802 du procédé de la figure 21.

A l'étape 903, des ébauches fibreuses individuelles sont découpées dans la bande fibreuse.

Sur chaque ébauche fibreuse 100 découpée, un élément de plate-forme 400 est mis en place comme décrit en référence aux figures 6 et 7 (étape 904).

Ensuite, un élément de talon 500 est mis en place comme décrit en référence aux figures 8 et 9 (étape 905).

L'ébauche 100 munie des éléments de plate-forme et de talon est mise en forme dans un moule ou conformateur (étape 906) pour obtenir une préforme d'aube avec plate-forme et talon intégrés.

A l'étape 907, un revêtement d'interphase de défragilisation est formé par CVI sur les fibres de l'ébauche mise en forme. Le matériau du revêtement d'interphase est par exemple PyC, BN ou BC, comme précédemment mentionné. L'épaisseur du revêtement d'interphase est de quelques dizaines à quelques centaines de nanomètres.

La préforme étant toujours maintenue en forme dans le conformateur, une consolidation de la préforme par densification partielle est réalisée (étape 908), la consolidation étant réalisée par formation de dépôt céramique sur les fibres par CVI par exemple un dépôt SiC. Aux fins de formation du revêtement et de consolidation par CVI, le conformateur est de préférence en graphite et présente des trous facilitant le passage de la phase gazeuse réactionnelle donnant le dépôt céramique par CVI.

De la même manière que déjà indiqué, la liaison effective des éléments de plate-forme et de talon avec l'ébauche pourra être réalisée par codensification partielle au stade de consolidation.

Lorsque la consolidation est suffisante pour que la préforme puisse être manipulée tout en conservant sa forme sans assistance d'outillage de maintien, la préforme consolidée est extraite du conformateur et la densification par une matrice céramique (par exemple en SiC) par CVI est réalisée. La densification peut être réalisée en deux étapes successives (étapes 909 et 911) séparées par une étape 910 d'usinage de l'aube aux dimensions désirées.

Dans les modes de réalisation des figures 21 et 22, l'usinage a pour but de conférer à la pale de l'aube le profil désiré et de conférer les formes voulues à la plate-forme et au talon (notamment, pour ce dernier, les léchettes et la baignoire). On notera qu'un pré-usinage des éléments de plate-forme et de talon peut être réalisé au stade rigidifié, sur les éléments de plate-forme et de talon ou sur les profilés rigidifiés, avant tronçonnage.

On notera que, dans les modes de réalisation décrits plus haut, la densification de la préforme par CVI de même que la rigidification des éléments de plate-forme et de talon peuvent être réalisées par une matrice autre que SiC, notamment une matrice de carbone ou une matrice auto-cicatrisante, des exemples de phases de matrice auto-cicatrisantes étant un système ternaire Si-B-C ou du carbure de bore B₄C. On pourra se référer aux documents US 5 246 736 et US 5 965 266 qui décrivent l'obtention par CVI de telles matrices autocicatrisantes.

Dans la description détaillée qui précède, la réalisation d'une aube mono-pale a été envisagée. L'invention est toutefois applicable à la réalisation d'aubes à plusieurs pales, par exemple d'aubes bi-pales ou doublets.

La figure 23 montre une préforme 1000 d'aube bi-pale comprenant deux éléments de préforme semblables 1200 comprenant chacun une partie de préforme de pale 1220, une partie de préforme de pied 1230 et une partie de préforme d'échasse 1232. Les parties de préforme 1220, 1230, 1232 sont similaires aux parties de préforme 220, 230 et 232 de la figure 10, les éléments de préforme 1200 pouvant être réalisés à partir d'ébauches fibreuses telles que les ébauches 100 décrites plus haut.

La préforme 1000 comprend en outre un élément de plate-forme 1400 (figure 24) formé de couches fibreuses superposées et liées entre elles et rigidifié en forme de la même manière que l'élément de plate-forme 400 décrit plus haut. L'élément de plate-forme 1400 reproduit sensiblement la forme de la plate-forme commune de l'aube bi-pale à réaliser avec une partie centrale 1402 et des parties d'extrémité 1404, 1406 formant becquets. La partie centrale 1402 présente une épaisseur réduite, inférieure à celle des parties d'extrémité 1404, 1406. Dans la partie centrale 1402, deux ouvertures traversantes ou lumières 1408a et 1408b sont formées qui reproduisent sensiblement le profil des pales de l'aube à fabriquer au niveau du raccordement avec la plate-forme.

La préforme 1000 comprend encore un élément de talon 1500 (figure 25) formé de couches fibreuses superposées et liées entre elles et rigidifié en forme de la même manière que l'élément de talon 500 décrit plus haut. L'élément de talon 1500 reproduit sensiblement la forme à section en U du talon commun de l'aube bi-pale à fabriquer avec une partie centrale 1502 et des parties d'extrémité relevées 1506. La partie centrale 1502 a une épaisseur réduite et présente deux ouvertures traversantes ou lumière 1508a, 1508b qui reproduisent sensiblement le profil des pales de l'aube à fabriquer au niveau du raccordement avec le talon.

Les éléments de plate-forme et de talon 1400 et 1500 sont mis en place sur les éléments de préforme 1200 et assemblés avec ceux-ci de façon semblable à celle décrite plus haut pour les éléments 400, 500.

Ce mode de réalisation d'une aube bi-pale se distingue donc du mode de réalisation d'une aube mono-pale essentiellement par l'utilisation d'éléments de plate-forme et de talon en une seule pièce communs à deux pales.

## Revendications

1. Procédé de fabrication d'une aube (10) de turbomachine en matériau composite à plate-forme et/ou talon intégré, comprenant la réalisation séparée d'un élément (400, 500) de plate-forme ou talon d'aube comprenant un renfort fibreux rigidifié et ayant une forme voisine d'une plate-forme ou d'un talon de l'aube à fabriquer, au moins une ouverture ayant une forme de profil de pale de l'aube à fabriquer étant formée dans l'élément de plate-forme ou talon, l'engagement de l'élément de plate-forme ou talon par son ouverture sur une préforme de pale et pied d'aube à renfort fibreux et l'assemblage de l'élément de plate-forme ou talon avec la préforme de pale et pied d'aube,
**caractérisé en ce que**
- une ébauche fibreuse souple (100) en une seule pièce comprenant des parties de préforme de pale et pied d'aube est réalisée par tissage tridimensionnel,
- l'élément (400, 500) de plate-forme ou talon est engagé par son ouverture sur l'ébauche fibreuse souple avec déformation de celle-ci, pour assemblage de l'élément de plate-forme ou talon avec l'ébauche fibreuse,
- une mise en forme de l'ébauche fibreuse avec l'élément de plate-forme ou talon assemblé est réalisée pour obtenir une préforme d'aube (110) ayant une forme voisine de celle de l'aube à fabriquer,
- après mise en forme, la préforme d'aube est consolidée dans sa forme dans un conformateur, et
- une densification finale de la préforme d'aube consolidée est réalisée pour obtenir une aube en matériau composite à plate-forme ou talon intégré.

2. Procédé selon la revendication 1, **caractérisé en ce que** l'ébauche est réalisée avec en outre des parties de liaison déployables (106c, 108c, 102a, 102b) pour superposition et liaison à l'élément de plate-forme ou talon après engagement de celui-ci.

3. Procédé selon la revendication 2, **caractérisé en ce que**, lors du tissage de l'ébauche, des zones de déliaison (106a, 108a, 102c) sont ménagées pour faciliter le déploiement des parties de liaison.

4. Procédé selon l'une quelconque des revendications 1 à 3, **caractérisé en ce que** la liaison de l'élément de plate-forme ou talon avec l'ébauche fibreuse est réalisée par couture, épinglage ou codensification.

5. Procédé selon l'une quelconque des revendications 1 à 4, **caractérisé en ce que** la préforme d'aube est consolidée par infiltration chimique en phase gazeuse.

6. Procédé selon l'une quelconque des revendications 1 à 4, **caractérisé en ce que** la consolidation comprend une imprégnation par une composition de consolidation contenant une résine, puis la réticulation de la résine après mise en forme.

7. Procédé selon la revendication 6, **caractérisé en ce que** l'imprégnation est réalisée sur l'ébauche avant mise en forme.

8. Procédé selon l'une quelconque des revendications 1 à 7, **caractérisé en ce qu'**une pluralité d'ébauches fibreuses (100) sont tissées dans une bande continue (200; 300) et des ébauches individuelles sont découpées dans la bande tissée.

9. Procédé selon l'une quelconque des revendications 1 à 8, **caractérisé en ce qu'**une pluralité d'éléments de plate-forme ou talon sont découpés dans un profilé obtenu par mise en forme de plusieurs couches fibreuses liées entre elles et rigidification.

10. Procédé selon l'une quelconque des revendications 1 à 9, **caractérisé en ce que** l'élément de plate-forme ou talon est rigidifié par infiltration chimique en phase gazeuse.

11. Procédé selon l'une quelconque des revendications 1 à 9, **caractérisé en ce que** l'élément de plate-forme ou talon est rigidifié par imprégnation par une composition de rigidification comprenant une résine, puis réticulation de la résine.

12. Procédé selon la revendication 6, **caractérisé en ce que** l'élément de plate-forme ou talon est rigidifié par imprégnation par une composition de rigidification comprenant une résine puis réticulation de la résine et les résines de consolidation de l'ébauche fibreuse et de rigidification de l'élément de plate-forme ou talon sont pyrolysées simultanément.

13. Procédé selon l'une quelconque des revendications 1 à 12 pour la fabrication d'une aube multi-pales (1000) **caractérisé en ce qu'**il comprend les étapes de :
- réalisation par tissage tridimensionnel de plusieurs ébauches fibreuses en une seule pièce comprenant chacune des parties de préforme de pale et de pied d'aube,
- réalisation séparée de l'élément (1400, 1500) de plate-forme ou talon d'aube présentant plusieurs ouvertures en forme de profil de pale, et
- engagement de l'élément de plate-forme ou talon par ses ouvertures simultanément sur les ébauches fibreuses.

## Patentansprüche

1. Verfahren zur Herstellung einer Turbomaschinenschaufel (10) aus Verbundwerkstoff mit integrierter/integriertem Plattform und/oder Deckband, umfassend die separate Ausbildung eines Schaufelplattform- oder -deckband-Elements (400, 500), das eine versteifte Faserverstärkung umfasst und eine Form ähnlich einer Plattform oder eines Deckbandes der herzustellenden Schaufel aufweist, wobei wenigstens eine Öffnung, die eine Form eines Blattprofils der herzustellenden Schaufel aufweist, in dem Plattform- oder Deckband-Element ausgebildet ist, das Aufstecken des Plattform- oder Deckband-Elements mit seiner Öffnung auf einen Schaufelblatt- und -fuß-Vorformling mit Faserverstärkung sowie das Verbinden des Plattform- oder Deckband-Elements mit dem Schaufelblatt- und -fuß-Vorformling,
**dadurch gekennzeichnet, dass**
- ein flexibler einstückiger Faserrohling (100), der Schaufelblatt- und -fuß-Vorformlingteile umfasst, durch dreidimensionales Weben hergestellt wird,
- das Plattform- oder Deckband-Element (400, 500) mit seiner Öffnung auf den flexiblen Faserrohling unter Verformung dessen aufgesteckt wird, um das Plattform- oder Deckband-Element mit dem Faserrohling zu verbinden,
- ein Formen des Faserrohlings mit dem montierten Plattform- oder Deckband-Element vollzogen wird, um einen Schaufelvorformling (110) mit einer Form ähnlich derjenigen der herzustellenden Schaufel zu erhalten,
- der Schaufelvorformling, nach dem Formen, in seiner Form in einem Former verfestigt wird, und
- eine abschließende Verdichtung des verfestigten Schaufelvorformlings durchgeführt wird, um eine Schaufel aus Verbundwerkstoff mit integrierter/integriertem Plattform oder Deckband zu erhalten.

2. Verfahren nach Anspruch 1, **dadurch gekennzeichnet, dass** der Rohling mit außerdem entfaltbaren Verbindungsteilen (106c, 108c, 102a, 102b) zum Darüberlegen über das und Verbinden mit dem Plattform- oder Deckband-Element nach dessen Aufstecken ausgebildet ist.

3. Verfahren nach Anspruch 2, **dadurch gekennzeichnet, dass** während des Webens des Rohlings Trennbereiche (106a, 108a, 102c) ausgebildet werden, um das Entfalten der Verbindungsteile zu erleichtern.

4. Verfahren nach einem der Ansprüche 1 bis 3, **dadurch gekennzeichnet, dass** das Verbinden des Plattform- oder Deckband-Elements mit dem Faserrohling durch Nähen, Heften oder gemeinsames Verdichten vollzogen wird.

5. Verfahren nach einem der Ansprüche 1 bis 4, **dadurch gekennzeichnet, dass** der Schaufelvorformling durch chemische Gasphaseninfiltration verfestigt wird.

6. Verfahren nach einem der Ansprüche 1 bis 4, **dadurch gekennzeichnet, dass** die Verfestigung ein Imprägnieren mit einer ein Harz enthaltenden Verfestigungszusammensetzung, anschließend das Vernetzen des Harzes nach dem Formen umfasst.

7. Verfahren nach Anspruch 6, **dadurch gekennzeichnet, dass** das Imprägnieren an dem Rohling vor dem Formen durchgeführt wird.

8. Verfahren nach einem der Ansprüche 1 bis 7, **dadurch gekennzeichnet, dass** eine Vielzahl von Faserrohlingen (100) in einem durchgehenden Streifen (200; 300) gewebt werden und einzelne Rohlinge aus dem gewebten Streifen ausgeschnitten werden.

9. Verfahren nach einem der Ansprüche 1 bis 8, **dadurch gekennzeichnet, dass** eine Vielzahl von Plattform- oder Deckband-Elementen aus einem Profil, das durch Formen von mehreren untereinander verbundenen Faserlagen und Versteifen erhalten wird, ausgeschnitten werden.

10. Verfahren nach einem der Ansprüche 1 bis 9, **dadurch gekennzeichnet, dass** das Plattform- oder Deckband-Element durch chemische Gasphaseninfiltration versteift wird.

11. Verfahren nach einem der Ansprüche 1 bis 9, **dadurch gekennzeichnet, dass** das Plattform- oder Deckband-Element durch Imprägnieren mit einer ein Harz umfassenden Versteifungszusammensetzung, anschließend Vernetzen des Harzes versteift wird.

12. Verfahren nach Anspruch 6, **dadurch gekennzeichnet, dass** das Plattform- oder Deckband-Element durch Imprägnieren mit einer ein Harz umfassenden Versteifungszusammensetzung, anschließend Vernetzen des Harzes versteift wird und die Harze zum Verfestigen des Faserrohlings und zum Versteifen des Plattform- oder Deckband-Elements gleichzeitig pyrolysiert werden.

13. Verfahren nach einem der Ansprüche 1 bis 12, für die Herstellung einer mehrblättrigen Schaufel (1000), **dadurch gekennzeichnet, dass** es die Schritte umfasst:
- des Ausbildens von mehreren einstückigen Faserrohlingen durch dreidimensionales Weben, die jeweils Schaufelblatt- und -fuß-Vorformlingteile umfassen,
- des separaten Ausbildens des Schaufelplattform- oder -deckband-Elements (1400, 1500), das mehrere blattprofilförmige Öffnungen aufweist, und
- des Aufsteckens des Plattform- oder Deckband-Elements mit seinen Öffnungen gleichzeitig auf die Faserrohlinge.

## Claims

1. A method of fabricating a composite material turbomachine blade (10) having a bottom and/or top platform incorporated therein, the method comprising: separately making a blade bottom or top platform element (400,500) that comprises rigidified fiber reinforcement and that has a shape close to the shape of a bottom or top platform of the blade that is to be fabricated, with at least one opening being formed through the bottom or top platform element, the opening having the shape of the profile of the airfoil of the blade that is to be fabricated; engaging the bottom or top platform element by means of its opening on a fiber reinforcement preform for an airfoil and a root of a blade; and assembling the bottom or top platform element with the blade airfoil-and-root preform;
the method being **characterized by** the following steps:
- using three-dimensional weaving to make a flexible fiber blank (100) as a single piece that includes blade airfoil-and-root preform portions;
- engaging the bottom or top platform element (400,500) via its opening on the flexible fiber blank while deforming it so as to assemble the bottom or top platform element with the fiber blank;
- shaping the fiber blank together with the bottom or top platform element assembled thereon in order to obtain a blade preform (110) of a shape that is close to the shape of the blade that is to be fabricated;
- after shaping, consolidating the blade preform in its shape in a shaper; and
- performing final densification of the consolidated blade preform in order to obtain a composite-material blade having an incorporated bottom or top platform.

2. A method according to claim 1, **characterized in that** the blank is also made with deployable connection portions (106c,108c,102a,102b) for superposing on and bonding to the bottom or top platform element after it has been engaged.

3. A method according to claim 2, **characterized in that** while weaving the blank, non-interlinked zones (106a,108a,102c) are left to facilitate the deployment of the connection portions.

4. A method according to any one of claims 1 to 3, **characterized in that** the connection of the bottom or top platform element with the fiber blank is performed by stitching, pinning, or co-densification.

5. A method according to any one of claims 1 to 4, **characterized in that** the blade preform is consolidated by chemical vapor infiltration.

6. A method according to any one of claims 1 to 4, **characterized in that** the consolidation comprises impregnating with a consolidation composition containing a resin, and then curing the resin after shaping.

7. A method according to claim 6, **characterized in that** the impregnation is performed on the blank prior to shaping.

8. A method according to any one of claims 1 to 7, **characterized in that** a plurality of fiber blanks (100) are woven in a continuous strip (200;300) and individual blanks are cut out from the woven strip.

9. A method according to any one of claims 1 to 8, **characterized in that** a plurality of bottom or top platform elements are cut from a section member that is obtained by shaping a plurality of bonded-together fiber layers and by rigidification.

10. A method according to any one of claims 1 to 9, **characterized in that** the bottom or top platform element is rigidified by chemical vapor infiltration.

11. A method according to any one of claims 1 to 9, **characterized in that** the bottom or top platform element is rigidified by impregnation with a rigidification composition comprising a resin, followed by curing the resin.

12. A method according to claim 6, **characterized in that** the bottom or top platform element is rigidified by impregnating with a rigidification composition comprising a resin and then curing the resin, and the consolidation resin of the fiber blank and the rigidification resin of the bottom or top platform element are pyrolized simultaneously.

13. A method according to any one of claims 1 to 12, for fabricating a multi-airfoil blade (1000), the method being **characterized in that** it comprises the steps of:
- using three-dimensional weaving to make a plurality of fiber blanks as single pieces, each comprising respective blade airfoil-and-root preform portions;
- separately making the bottom or top blade platform elements (1400,1500) having a plurality of openings of airfoil profile shape; and
- engaging the bottom or top platform element via its openings simultaneously on the fiber blanks.
